# EUROPEAN PATENT APPLICATION

(11) **EP 4 838 228 A1**
(43) Date of publication of application: **11.11.2026**
(21) Application number: 26171665.8
(22) Date of filing: 10.04.2026
(51) Int. Cl.: G01P 21/02, G01P 3/44, G05B 23/02

(54) **NON-INTRUSIVE IMU AND AI-BASED ROTIONAL SPEED MONITORING OF EQUIPMENT**

(30) Priority: 05.05.2025 IN 202511043407
(71) Applicant: Honeywell International Inc., Charlotte, NC 28202 (US)
(72) Inventor: MUNIRAJU, Raghavendra, Charlotte, 28202 (US); DESHPANDE, Tushar, Charlotte, 28202 (US); M, Surya, Charlotte, 28202 (US)
(74) Representative: Haseltine Lake Kempner LLP

(57) **Abstract**

An example system for non-intrusive inertial measurement unit (IMU) and artificial intelligence (AI)-based rotation monitoring of machines located at a site, the system comprises an IMU sensor configured to collect a plurality of different types of sensor data indicative of a rotational speed of a rotating element of a rotating machine, the plurality of different types of sensor data include angular velocity data, three-axis linear acceleration data, audio data, and magnetic field data. The example system also comprises a controller coupled to the IMU sensor, the controller including a processor and a memory storing non-transitory instructions executable by the processor to: preprocess the plurality of different types of sensor data to a plurality of preprocessed different types of sensor data; and query a trained machine-learning model with the preprocessed different types of sensor data to obtain an estimated rotation speed value of the rotating machine.

## Description

### Technical Field

The present disclosure generally relates to the field of non-intrusive rotational speed monitoring of equipment. More specifically, the present disclosure relates to non-intrusive inertial measurement unit (IMU) and artificial intelligence (Al)-based rotational speed monitoring of equipment and optimization of operation of the equipment based thereon.

### Background

Rotating machinery monitoring plays a critical role in industrial operations, particularly for equipment such as motors, turbines, compressors, and other rotary systems. These machines are important across a range of industries and often operate in demanding or remote environments. Over time, such operating conditions can lead to component wear, performance degradation, or even failure. Accordingly, rotating machinery requires ongoing monitoring and maintenance to ensure safe, efficient, and reliable operation.

Maintenance of rotating equipment is often performed on a scheduled basis (e.g., at fixed time intervals or after a specific amount of runtime). However, scheduled maintenance can be inefficient and costly. For instance, a machine might be operating normally during its scheduled maintenance window, resulting in unnecessary downtime and servicing. On the other hand, if a machine develops a fault between scheduled intervals, critical operational time may be lost before corrective action is taken.

Condition-based maintenance provides a more effective and cost-efficient approach compared to scheduled maintenance. By analyzing key parameters such as rotational speed (e.g., RPM), it is possible to detect early signs of abnormal machine behavior and address issues before they escalate. Rotational speed is a critical diagnostic parameter, as variations or deviations from expected rotational speed profiles can be indicative of a wide range of faults, including imbalance, gear faults, bearing defects, winding issues, and other mechanical or electrical anomalies.

Therefore, there is a need for systems and methods capable of accurately detecting deviations in rotational speed across various types of industrial rotating equipment, facilitating proactive and data-driven maintenance strategies.

### Summary

As mentioned, rotating machinery monitoring plays a critical role in industrial operations. Yet, monitoring rotational speed of a component can be challenging. Traditional rotational speed (e.g., RPM) monitoring systems often require intrusive procedures that interrupt operations, reduce efficiency, fail to provide real-time measurements, and/or are prone to inaccuracies.

For instance, conventional methods rely on various sensors, such as photoelectric speed sensors, magnetic speed sensors, Hall effect sensors, eddy current speed sensors, and giant reluctance speed sensors. However, all these methods require both an on-shaft and an off-shaft component to generate signals during rotation. These components can degrade over time, leading to inaccuracies. Additionally, traditional systems often depend on a single sensor and may not account for varying sensor effectiveness in different environments. Consequently, these approaches may introduce delays or inaccuracies in detecting unintended deviations in rotational speed.

Failure to detect issues early can lead to costly repairs and even complete part replacements. Unreliable components contribute to frequent breakdowns, negatively impacting system dependability. Furthermore, when a components rotational speed is unknown, efficiency calculations become inaccurate, leading to increased energy consumption and suboptimal performance.

Non-intrusive rotational speed monitoring promotes identifying mechanical issues such as excessive noise and vibration. Detecting unintended changes in rotational speed early can help prevent equipment damage, improve efficiency, and enhance working conditions. Many industries must also comply with strict noise and vibration regulations, making precise monitoring critical. Additionally, real-time rotational speed data permits quick issue detection and resolution, facilitating faster decision-making, reducing unexpected failures, and minimizing downtime. However, conventional RPM monitoring methods, as described above, often require physical contact with the rotating component, which may not always be feasible and can contribute to wear and tear over time.

Cost-effectiveness is another key factor in implementing RPM monitoring solutions. Some systems rely on cloud-based data processing rather than localized or edge-based implementations, increasing resource demands and operational expenses. Additionally, the inability to log RPM data complicates root cause analysis, making it difficult to diagnose and resolve issues efficiently. Scalability is also a concern, as current RPM monitoring technologies do not easily adapt to different types of machinery, such as compressors and turbines. This limitation hinders the implementation of a universal monitoring solution across diverse industrial applications.

Accordingly, the present disclosure provides a novel approach to non-intrusive RPM monitoring using inertial measurement unit (IMU) sensors and advanced data processing techniques. The system employs multiple IMU sensors to collect rotation data, with a convolutional neural network (CNN) that intelligently classifies the data according to different frequency ranges. This selective consideration of IMU sensor data permits more accurate RPM calculations while maintaining operational efficiency. The systems and methods herein can be utilized with a variety of different types of rotating equipment to determine or estimate rotational speed, determine building equipment failures based on the determined rotational speeds (e.g., determine a deviation from a set point or intended rotational speed), and optimize performance of the rotating equipment.

The systems and methods herein permit predictive maintenance by analyzing RPM data to identify potential machinery issues before they develop into significant problems. This proactive approach helps reduce maintenance costs and unplanned downtimes while ensuring machinery operates within safe operational thresholds. The data-driven nature of the system and methods herein results in them becoming increasingly accurate over time as more operational data is collected and processed. The above improvements collectively enhance system performance, efficiency, and accuracy, as detailed herein. For instance, at least in view of the above, the system, devices, and methods herein, can mitigate downtime, repair/replacement costs, and/or any impact on tenants or occupants of buildings, as compared to other approaches so as those that rely solely on reactive maintenance or rely solely on predefined rules and/or direct analysis of telemetry data to predict/detect building equipment issues or failures.

The non-intrusive IMU and AI based rotational speed monitoring of equipment may occur at a site. In some embodiments, the site can include an outdoor location, an indoor location, or a combination of an indoor location and an outdoor location. For instance, a site can be a single building or facility, a plurality (e.g., group) of buildings, an area (e.g., room(s), space(s), zone(s), etc.) within a building or facility, or a campus of an organization. Embodiments of the present disclosure are not limited to these examples.

A particular example of the present disclosure includes an illustrative system for non-intrusive inertial measurement unit (IMU) and artificial intelligence (Al)-based rotation monitoring of machines located at a site, the system comprising: an IMU sensor configured to collect a plurality of different types of sensor data indicative of a rotational speed of a rotating element of a rotating machine (e.g., a rotating industrial machine), the plurality of different types of sensor data include: angular velocity data, three-axis linear acceleration data, audio data, and magnetic field data; and a controller coupled to the IMU sensor, the controller including a processor and a memory storing non-transitory instructions executable by the processor to: preprocess the plurality of different types of sensor data to a plurality of preprocessed different types of sensor data; and query a trained machine-learning model with the preprocessed different types of sensor data to obtain an estimated rotation speed value of the rotating machine.

Another example of the present disclosure is a non-transitory, computer-readable medium including instructions that when executed by a processor cause the processor to: receive a plurality of different types of sensor data indicative of a rotation speed of a rotating machine at a site, the plurality of different types of sensor data include: angular velocity data, three-axis linear acceleration data, audio data, and magnetic field data; preprocess the plurality of different types of sensor data to a plurality of preprocessed different types of sensor data, wherein preprocessing the data includes transforming the data into Fast Fourier transform (FFT) data; query a trained machine-learning model with the preprocessed different types of sensor data; perform feature selection of the preprocessed different types of sensor data to obtain an estimated rotation speed of the rotating machine based on the selected features; compare the estimated rotation speed to an expected rotation speed of the rotating machine; and based on the comparison, identify an equipment issue with the rotating machine.

Another example of the present disclosure is a method for non-intrusive IMU and AI-based rotational speed monitoring of industrial equipment, the method comprising: receiving, from a plurality of sensors included in an IMU, a plurality of different types of sensor data indicative of a rotation speed of a rotating machine at a site, the plurality of different types of sensor data include: angular velocity data, three-axis linear acceleration data, audio data, and magnetic field data; preprocessing the plurality of different types of sensor data to a plurality of preprocessed different types of sensor data including preprocessed audio data, preprocessed angular velocity data, preprocessed linear acceleration data, and preprocessed magnetic field data, wherein preprocessing the data includes transforming the data into Fast Fourier transform (FFT) data; and querying a trained machine-learning model with a combination of: the preprocessed audio data; and at least one of the preprocessed angular velocity data, the preprocessed three-axis linear acceleration data, and the preprocessed magnetic field data obtain an estimated rotation speed value of the rotating machine; comparing the estimated rotation speed to an expected rotation speed; and based on the comparison, identifying the presence of an equipment issue with the rotating machine.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### Brief Description of the Figures

The disclosure may be more completely understood in consideration of the following description of various examples in connection with the accompanying drawings, in which:
FIG. 1 is a schematic block diagram of an illustrative industrial process control and automation system;
FIG. 2 is an example computing device for non-intrusive inertial measurement unit (IMU) and artificial intelligence (AI)-based rotational speed monitoring of industrial equipment;
FIG. 3 is an example of a flow diagram showing an illustrative process for non-intrusive IMU and AI-based rotational speed monitoring of industrial equipment;
FIG. 4 is another example flow diagram showing an illustrative process for non-intrusive IMU and AI-based rotational speed monitoring of industrial equipment;
FIG. 5 is another example flow diagram showing an illustrative process for non-intrusive IMU and AI-based rotational speed monitoring of industrial equipment;
FIG. 6 is an example flow diagram showing an illustrative process for feature selection for non-intrusive IMU and AI-based rotational speed monitoring of industrial equipment;
FIG. 7 illustrates training performance graphs of a neural network architecture suitable for non-intrusive IMU and AI-based rotational speed monitoring of industrial equipment;
FIG. 8 illustrates example relationships between a quantity of data points and mean absolute error rates for non-intrusive IMU and AI-based rotational speed monitoring of industrial equipment;
FIG. 9 illustrates performance graphs demonstrating aspects of non-intrusive IMU and AI-based rotational speed monitoring of industrial equipment; and
FIG. 10 illustrates an example method of non-intrusive IMU and AI-based rotational speed monitoring of industrial equipment.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### Description

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic is described in connection with an embodiment, it is contemplated that the feature, structure, or characteristic may be applied to other embodiments whether or not explicitly described unless clearly stated to the contrary.

As detailed herein, the present disclosure pertains to a non-intrusive rotational speed (e.g., RPM) monitoring system that utilizes multiple IMU sensors (including gyroscope, accelerometer, magnetometer, and audio sensors). An example of a suitable IMU sensor which includes a gyroscope, an accelerometer, a magnetometer, and audio sensors is the VERSATILIS^{™} transmitter available from HONEYWELL INTERNATIONAL INC. This system operates as an edge device (e.g., at the same location as a rotational machine) with embedded software that intelligently classifies IMU sensor data according to different frequency ranges using a convolutional neural network, as detailed herein. For example, in situations with less data, the system can process "n"-point time series data (where "n" is any quantity of points) through band pass filters and FFT analysis, while for situations with more data, the system can employ selective feature consideration based on magnetometer sampling frequency thresholds, as detailed herein. The system can uniquely leverage earth's magnetic field interactions and mechanical vibrations to extract both time-domain and frequency-domain statistical features, achieving highly accurate rotation speed determinations (e.g., with a mean absolute error of 0.887865Hz), even with a limited quantity of data points (e.g., with just 370 datapoints). This unique multi-faceted data-driven approach permits deployment of predictive maintenance while also improving accuracy of the rotational speed determinations over time through continuous monitoring and feedback analysis, thereby helping prevent machinery failures and reduce maintenance costs through early detection of operational anomalies (e.g., unwanted variations in a rotational speed of rotating equipment such as a motor, turbine, or compressor).

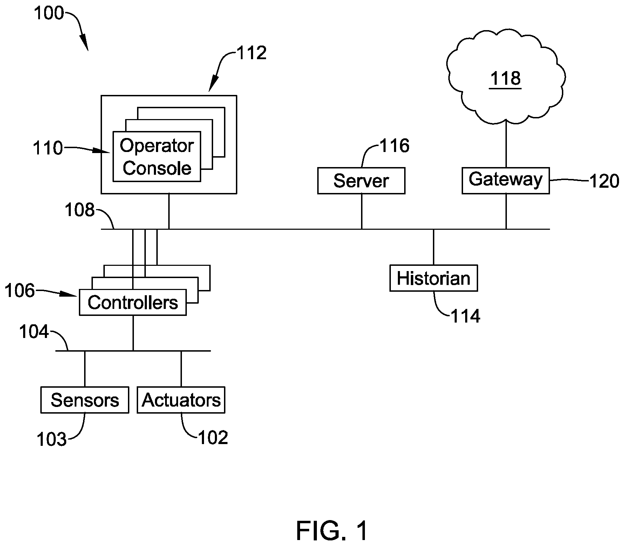

FIG. 1 provides a schematic block diagram showing an illustrative industrial process control and automation system 100 suitable for non-intrusive IMU and artificial intelligence (AI)-based rotation monitoring of rotating machines located at site. The system 100 includes various components that facilitate production or processing of at least one product or other material with various building equipment (e.g., a rotary motor, rotary shaft and/or another type of rotating equipment). For instance, the system 100 can be used to facilitate control over components in one or multiple industrial plants. The industrial plants may be one or more processing facilities (or one or more portions thereof), such as one or more manufacturing facilities for producing at least one product or other material or entity. In general, the industrial plants may implement one or more industrial processes and can individually or collectively be referred to as a process system. A process system generally represents any system or portion thereof configured to process one or more products (e.g., generated energy which can be distributed to other parts of the industrial plant or otherwise sold) or other materials in some manner.

The system 100 includes one or more sensors 103 and one or more actuators 102. The sensors 103 and the actuators 102 represent components in a process system that may perform any of a wide variety of functions. In certain embodiments, sensors 103 and actuators 102 can correspond to equipment that is controlled by the automation system. That is, the sensors 103 and actuators 102 represent components in the industrial plant that perform any of a wide variety of functions. For example, sensors and actuators can measure various characteristics of the process system as well as alter any number of characteristics in the process system of the industrial plant represented by the system 100. The sensors 103 and actuators 102 can be automatically controlled by the process system of the industrial plant (e.g., to permit autocorrection of building equipment failures, as detailed herein), manually controlled, or a combination thereof. The control and manipulation of the sensors 103 by the personnel or the process system of the industrial plant, or the combination thereof can be recorded by the historian, discussed in further detail below. For example, each time the sensors 103 and actuators 102 are adjusted, a record is created within the historian. The sensors 103 may measure a wide variety of characteristics in the process system, such as but not limited to temperature, pressure, flow rate, chemical concentrations, or a voltage transmitted through an electrical conductor. The actuators 102 may represent devices that are configured to alter a wide variety of characteristics in the process system. As an example, the actuators 102 may open or close one or more valves, or increase or decrease a process set point or the like. At any rate, each sensor 103 may include any suitable structure for measuring one or more characteristics in a process system. Each actuator 102 may include any suitable structure for operating on or affecting one or more conditions of a process system.

In the example shown, a network 104 is coupled to the sensors 103 and the actuators 102. The network 104 facilitates interaction with the sensors 103 and the actuator 102. For example, the network 104 may transmit measurement data from the sensors 103 and/or may provide control signals to the actuator 102. The network 104 may represent any suitable network or combination of networks. As particular examples, the network 104 could represent at least one Ethernet network (such as one supporting a FOUNDATION FIELDBUS protocol), electrical signal network (such as a HART network), Ethernet network, pneumatic control signal network, or any other or additional type(s) of network(s), or any other type of communication path.

The illustrative system 100 also includes various controllers 106. The controllers 106 may, for example, be used in the system 100 to perform various functions in order to control one or more industrial processes and/or building equipment (e.g., motor, turbine, or compressor, etc.). To illustrate, a first set of controllers 106 may use measurements from one or more of the sensors 103 to control the operation of one or more of the actuators 102. A controller 18 may receive measurement data from one or more sensors 103 and use the measurement data to generate control signals for one or more actuators 102. A second set of controllers 106 may be used to optimize the control logic or other operations performed by the first set of controllers. A third set of controllers 106 could be used to perform additional functions. The controllers 106 could therefore support a combination of approaches, such as regulatory control, advanced regulatory control, supervisory control, and advanced process control.

Each of the controllers 106 may include any suitable structure for controlling one or more aspects of an industrial process. At least some of the controllers 106 may, for example, represent proportional-integral-derivative (PID) controllers or multivariable controllers, such as controllers implementing model predictive control (MPC) or other advanced predictive control (APC). As a particular example, each controller of the controllers 106 may represent a computing device running a real-time operating system, a WINDOWS operating system, or other operating system.

In the illustrative system 100, at least one network 108 couples to the controllers 106 and the other devices in the system 100. The network 108 facilitates communication of information between components. The network 108 may represent any suitable network or combination of networks. For example, the network 108 could represent an Ethernet network or any other suitable communication path.

Operator access to and interaction with the controllers 106 and other components of the system 100 can occur via various operator consoles 110. Each operator console 110 may be used to provide information to an operator and receive information from an operator. For example, each operator console 110 may provide information identifying a current state of an industrial process to the operator, such as values of various process variables and warnings, alarms, or other states (e.g., monitored rotational speed data of building equipment, etc.) associated with the industrial process. Each operator console of the operator consoles 110 may also receive information affecting how the industrial process is controlled, such as by receiving set points or control modes for process variables controlled by the controllers 106 or other information that alters or affects how the controllers 106 control the industrial process. Each operator console 110 may include any suitable structure for displaying information to and interacting with an operator. For example, each operator console 110 may represent a computing device running a WINDOWS operating system or other operating system. In some embodiments, the operator console 110 can be configured to display the dashboards described herein. Alternatively or additionally, the dashboards described herein can be displayed elsewhere, for instance, at a console associated with a supervisor or other personal associated with the industrial plant.

Multiple operator consoles 110 may be grouped together and used in one or more control rooms 112. Each control room 112 may include any number of operator consoles 110 in any suitable arrangement. In some cases, multiple control rooms 112 may be used to control an industrial plant, such as when each control room 112 contains operator consoles 110 used to manage a discrete part of the industrial process/plant.

The illustrative system 100 also includes one or more servers 116. Each server 116 denotes a computing device that executes applications for users of the operator consoles 110 or other applications. The applications could be used to support various functions for the operator consoles 110, the controllers 106, or other components of the system 100. The servers 116 may be located locally or remotely from the illustrative system 100. For instance, the functionality of the server 116 could be implemented in a computing cloud or a remote server communicatively coupled to the system 100 via a gateway such as gateway 120. Each server 116 may represent a computing device running a WINDOWS operating system or other operating system. Note that while shown as being local within the system 100, the functionality of the server 116 may be remote from the system 100. For instance, the functionality of the server 116 may be implemented in a cloud-based server 118 or a remote server communicatively coupled to the system 100 via the gateway 120.

The control and automation system 100 here also includes at least one historian 114. The historian 114 represents a component that stores various information about the system 100. The historian 114 could, for instance, store information that is generated by the various controllers and/or various operators, etc. during the control of one or more industrial processes. The historian 114 includes any suitable structure for storing and facilitating retrieval of information such as a volatile and/or non-volatile memory. Although shown as a single component here, the historian 114 could be located elsewhere in the system 100, or multiple historians could be distributed in different locations in the system 100.

Although FIG. 1 shows one example of the industrial process control and automation system 100, it will be appreciated that various changes may be made. For example, the control and automation system 100 may include any number of sensors, actuators, controllers, servers, networks, operator stations, operator consoles, control rooms, networks, and other components. Also, the makeup and arrangement of the system 100 in FIG. 1 is for illustration only. Components may be added, omitted, combined, further subdivided, or placed in any other suitable configuration according to particular needs. Further, particular functions have been described as being performed by particular components of the system 100. This is for illustration only. In general, control and automation systems are highly configurable and can be configured in any suitable manner according to particular needs. In addition, FIG. 1 illustrates one example operational environment of an industrial plant where system operations done by the various personnel can be monitored. This functionality can be used in any other suitable system, and that system need not be used for industrial process control and automation.

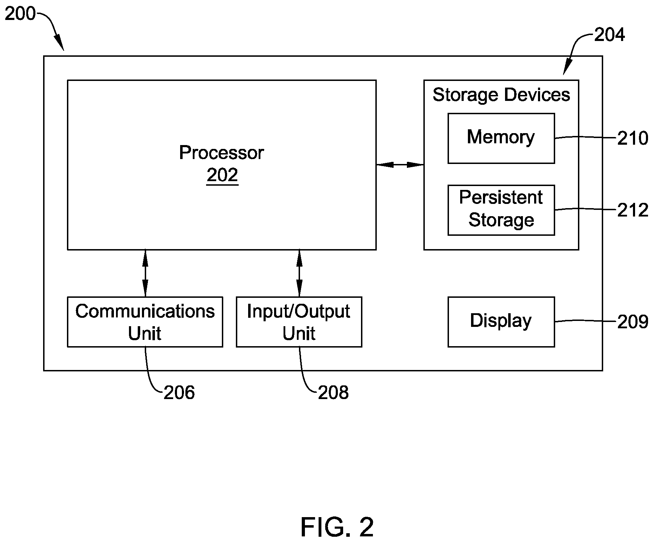

FIG. 2 illustrates an example computing device for non-intrusive IMU and AI-based rotational speed monitoring of industrial equipment. In particular, FIG. 2 illustrates an example computing device 200. In some embodiments, the computing device 200 could denote an operator station, server, a remote server or device, or a mobile device. The computing device 200 could be used to run applications. The computing device 200 could be used to perform one or more functions, such as collecting information, sorting and analyzing the information as well as generating a report of the analysis, and/or initiating remediation (e.g., initiating an autocorrection (e.g. a set point change) and/or manual remediation such as manual maintenance) of an identified building equipment failure (e.g., an occurrence of deviation of a calculated rotational speed from a set point, etc.). For ease of explanation, and the computing device 200 are described as being used in the system 100 of FIG. 1, although the computing device 200 could be used in any other suitable system (whether or not related to industrial process control and automation).

As shown in FIG. 2, the computing device 200 includes at least one processor 202, at least one storage device 204, at least one communications unit 206, and at least one input/output (I/O) unit 208. Each processor 202 can execute instructions, such as those that may be loaded into a memory 210.Each processor 202 denotes any suitable processing device, such as one or more microprocessors, microcontrollers, digital signal processors, application specific integrated circuits (ASICs), field programmable gate arrays (FPGAs), or discrete circuitry.

The memory 210 and a persistent storage 212 are examples of storage devices 204, which represent any structure(s) configured to store and facilitate retrieval of information (such as data, program code, and/or other suitable information on a temporary or permanent basis).The memory 210 may represent a random-access memory or any other suitable volatile or non-volatile storage device(s). The persistent storage 212 may contain one or more components or devices supporting longer-term storage of data, such as a read-only memory, hard drive, flash memory, or optical disc.

The communications unit 206 supports communications with other systems or devices. For example, the communications unit 206 could include at least one network interface card or wireless transceiver facilitating communications over at least one wired or wireless network (such as a local intranet or a public network like the Internet). The communications unit 206 may support communications through any suitable physical or wireless communication link(s).

The I/O unit 208 allows for input and output of data. For example, the I/O unit 208 may provide a connection for user input through a keyboard, mouse, keypad, touchscreen, or other suitable input device. The I/O unit 208 may also send output to a display such as a display 209, printer, or other suitable output device.

The display 209 allows at least output of data. In some instances, the display 209 corresponds to a monitor. In some embodiments, the display 209 corresponds to a touch screen display that allows input and output of data.

Although FIG. 2 illustrates example computing device 200 capable of facilitating or otherwise performing at least some aspects of non-intrusive IMU and AI-based rotational speed monitoring of industrial equipment and optimization of operation of the industrial equipment based thereon, changes may be made to FIG. 2. For example, various components in FIG. 2 could be combined, further subdivided, or omitted, and additional components could be added according to particular needs. As a particular example, processor 202 can be divided into multiple processors (e.g., hardware processors), such as one or more central processing units (CPUs) and one or more graphics processing units (GPUs). Also, computing device 200 can come in a wide variety of configurations, and FIG. 2 does not limit this disclosure to any particular computing device or mobile device.

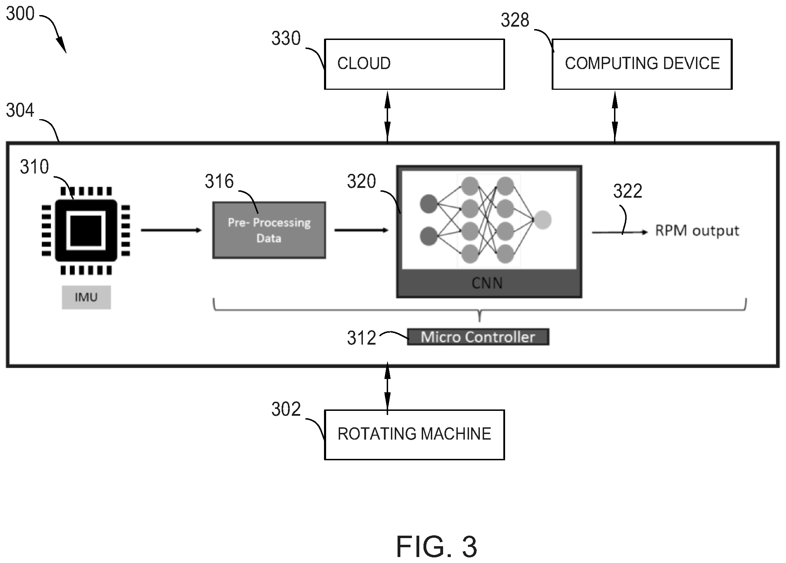

FIG. 3 is an example of a flow diagram 300 showing an illustrative process flow for non-intrusive IMU and AI-based rotational speed monitoring of industrial equipment and optimization of operation of the industrial equipment based thereon. The industrial equipment (depicted as 302 in FIG. 3) can be an electric rotating machine such as a motor, turbine, or compressor. However, the systems and methods herein are applicable to other types of rotating machines.

A computing device 304 can be communicatively coupled to a server such as a cloud server (330) and/or other component such as a system 304. The computing device can be analogous to the computing device 200 as described with respect to FIG. 2.

A system 304 for non-intrusive IMU AI-based rotation monitoring of machines located at a site is provided. As illustrated in FIG. 3, the system 304 can include an IMU sensor 310 and a controller 312 (e.g., a microcontroller) that is coupled to the IMU sensor 310. In some embodiments, the IMU sensor 310 and the controller 312 can be included in an individual edge device with embedded software connected securely to a cloud infrastructure (e.g., the cloud 330) and/or a computing device (e.g., computing device 328) via a wireless connection, as detailed herein. For instance, the system 304 can manifested as a VERSATILIS^{™} transmitter available from HONEYWELL INTERNATIONAL INC, which includes both the IMU sensor 310 and the controller 312 in an individual compact housing.

The system 304 can have wireless communication abilities including BLUETOOTH communication capabilities and/or LoRaWAN communication capabilities. The long-range, low-power LoRaWAN protocol to transmit data securely over extended distances (often up to several kilometers). This capability minimizes the need for cabling, reduces installation complexity, and lowers the overall operational costs while ensuring robust data encryption (AES256) for secure transmission. Complementing the long-range capabilities, the platform also features BLE communication on the 2.4 GHz band. This is primarily used for local device configuration, troubleshooting, and on-site data visualization (e.g., through a Honeywell VERSATILIS^{™} Connect application). BLE offers fast, reliable data exchange over short distances and simplifies commissioning and maintenance. The platform's wireless communications reduce reliance on extensive wiring and allow for adaptable installation in a variety of environments including for IMU and AI based detection of the rotation speed of rotating components such as those in electric rotating equipment including motors, turbines, and compressors. Data collected from the sensors (e.g., accelerometer, magnetometer, microphone, etc.) can be accessed locally on mobile devices (via the VERSATILIS^{™} Connect App, available on iOS, Android, and Windows) or integrated into larger plant systems (such as SCADA or asset management systems) for remote monitoring (e.g., or actual real-world rotational speed of one or more components of a rotating machine) and maintenance of the rotating machine.

The IMU sensor 310 can be configured to collect a plurality of different types of sensor data indicative of a rotational speed of a rotating element of a rotating machine, the plurality of different types of sensor data including: angular velocity data, three-axis linear acceleration data, audio data, and magnetic field data, among other types of data (e.g., temperature data, etc.)

For instance, the IMU sensor 310 can include a magnetometer configured to collect the magnetic field data; an accelerometer configured to collect the three-axis linear acceleration data; a microphone configured to collect the audio data; and a gyroscope configured to collect the angular velocity data. The magnetometer can monitor magnetic field interactions from the rotating machine and thereby use earth's magnetic field data to detect rotation of a component such as a rotating component in a motor, turbine, or compressor. It has been discovered the accuracy of the rotational speed detection data from the magnetometer may depend on whether the calculated rotational speed value is less than a fraction of an output data rate of the magnetometer. For instance, the magnetometer data may be most accurate when a rate of magnetic flux change of the target building equipment (e.g., the magnetic flux of a rotating component of a motor, turbine, or compressor) represented by the magnetic field data is less than a value which is equal to a fraction of the output data rate of the magnetometer. For instance, the rotational speed detection data from the magnetometer may be accurate when a rate of magnetic flux change of the target building equipment is less than a threshold rate that is equal to a fraction of an ODR of the magnetometer. For instance, the magnetometer data may saturate when the detected rate of magnetic flux change of the target building equipment is greater than a threshold rate (e.g., equal to ODR/"n", wherein "n" is equal to 2, 3, 4, 5, or 6), and thus lead to less reliable rotational speed determination. Accordingly, in some embodiments the systems and methods herein provide for feature selection of a model (e.g., a CNN) based for example on a comparison of the rate of magnetic flux change of the target building equipment to a threshold rate, as detailed herein.

The IMU sensor 310 can include an accelerometer. The accelerometer can be a MEMS based 3-axis accelerometer configured to measure linear acceleration in each axis. The accelerometer can capture the rapid and subtle dynamic changes in motion experienced by mechanical systems such as a motor, turbine, or compressor, and the broad frequency response of the accelerometer allows it to accurately record vibrations and shock events. This accelerometer can play an important role in condition monitoring by detecting minute deviations in equipment behavior, which can be analyzed to predict potential failures or performance degradation. Its robust design and sensitive measurement capabilities ensure that the sensor provides reliable, real-time data even in demanding industrial environments, enabling more effective maintenance strategies and improved operational efficiency. The accelerometer can be configured to monitor mechanical vibrations in square domain (second derivative). The accelerometer can accurately measure data indicative of rotational speed of a component at various rotational speed including higher rotational speeds (e.g., above ODR/n). In some embodiments, the 3 axis linear acceleration data detected by the accelerometer can be used in conjunction with data from a gyroscope and/or data from other sensors.

The IMU sensor 310 can include a gyroscope. The gyroscope can be a MEMS based 3 axis gyroscope configured to measure angular velocity. For instance, it can measure angular velocity and detect rotational movement across multiple axes. The gyroscope can intermittently or continuously monitor a rate of rotation and provides data that reflect even the subtle changes in orientation, which is important for understanding the dynamics of the system. By capturing these rotational measurements, the gyroscope can promote determination of a magnitude and a direction of turning motions such as the rotation of one or more components of a rotating machine, thus complementing the accelerometer's ability to detect linear motion. The gyroscope can accurately measure data indicative of rotational speed of a component at various rotational speed including higher rotational speeds (e.g., above ODR/n). In some embodiments, the 3 axis linear acceleration data detected by the accelerometer can be used in conjunction with data from a gyroscope and/or data from other sensors.

The IMU sensor 310 can include an audio sensor (i.e., a microphone). The microphone can be a sensitive MEMS device designed to convert acoustic energy into electrical signals with high precision. The microphone can capture a wide spectrum of sound frequencies, permitting it to detect both low-level ambient noises and sudden, high-intensity sound events. The auditory data can be used to monitor environmental changes or detect abnormal operating conditions in machinery. The microphones robust design and effective noise filtering ensure that it reliably delivers clear, real-time audio measurements even in noisy, industrial settings, thereby enhancing the overall performance of the sensor system. For instance, the microphone can be configured to periodically detect audio clips (e.g., 2 second long audio clips, etc.). The microphone can accurately measure data indicative of rotational speed of a component across various rotational speed including both lower and higher rotational speeds (e.g., above ODR/n). Hence, audio data from the microphone can be used to query the models herein in most or all instances. Stated differently, when feature selection is performed, the audio data can be selected and thus included as a feature of the models herein across a wide variety of rotational speeds. Thus, the audio data can be used as data baseline that can be complimented with data from one or more of the additional sensors (e.g., the magnetometer, the gyroscope, and/or the accelerometer).

In some embodiments, the IMU sensor 310 includes each of the magnetometer, the gyroscope, the accelerometer, and the audio sensor (microphone). The IMU sensor 310 can include additional sensors such as temperature sensors, ambient light sensors, and/or barometric pressure sensors, etc.

In some embodiments, the sensors can provide data (e.g., real-world and/or real-time data) to the controller 312 continuous, intermittently (e.g., influx) and/or periodic data (e.g., every few minutes, every few seconds, etc.).

In some embodiments, the received data (received at the controller 312) can undergo data integration (e.g., once received by the controller 312). Data integration can include data aggregation, data preprocessing, and/or data cleaning of the data received from one or more of the sensors. For instance, data received from a plurality of data sources can be aggregated to form an aggregated data set (which includes the data or a derivative of the data received from the plurality of data sources).

In some embodiments, the data received from the sensors can undergo data preprocessing or cleaning, for instance, to make the data amenable for aggregation (e.g., from two or more sensors) and/or make the data amenable for use in querying a machine-learning model (e.g., a CNN), such as those described herein. The data preprocessing or cleaning can be employed to remove inaccuracies, inconsistencies, and irrelevant information from data from one or more data sources which, if present, can negatively impact predictions made based on the data. In some embodiments, the data preprocessing can include normalization of the data and FFT generation, as described herein.

Aggregation, preprocessing, and/or cleaning of data from one or more data sources can be performed via a rule-based process and/or a machine-learning process. For instance, this could involve merging data streams from sensors. As used herein, the aggregated, preprocessed, and/or cleaned data can generally be referred to as a derivative of the received data (e.g., of the received read-world data). The aggregated data set (e.g., an aggregated, preprocessed, and cleaned data set) can be stored locally on the system 302 and/or can be stored in a centralized platform, such as ENTERPRISE BUILDINGS INTEGRATOR^{™} and/or FORGE; available from HONEYWELL^{™}, Inc.

In some embodiments, the data received at the controller 312 from the IMU sensor 310 can undergo transformation by applying a Fast Fourier Transform (FFT) separately to the time-domain data collected from each sensor. For example, the transformation can occur before or after applying a Butterworth bandpass filter. The Butterworth bandpass filter is used to isolate a specific frequency range in your signal (by attenuating frequencies outside that range), and then the FFT is applied to examine the frequency content of the filtered signal for each axis. For example, the data can undergo preprocessing e.g., to remove noise, etc. The preprocessed data can be further preprocessed with a bandpass filter such as Butterworth bandpass filter which can remove unwanted frequencies. With the unwanted frequencies removed, the FFTs for the data from each of the sensors can be computed e.g., to transform time-domain data into the frequency domain, thereby revealing the amplitude and phase of the frequency components present within your specified band.

Subsequent to preprocessing, the preprocessed data can be used to query a trained machine-learning model to obtain determine a rotating speed of a rotating machine such as one or more rotating components of a rotating machine. For instance, the systems and methods herein can perform feature selection of two or more of the preprocessed different types of sensor data to influence the determination of the rotational speed by the trained machine-learning model.

The audio data from the microphone can be a core feature. As used herein, a core feature refers to a feature that is relied upon when generating an output from the machine-learning model. As mentioned, the audio data yields accurate rotation speed determination across a wide variety of actual rotational speeds. Thus, the audio data can be used as data baseline (i.e., is selected during feature selection) that can be complimented with data from one or more of the additional sensors (e.g., the magnetometer, the gyroscope, and/or the accelerometer) to determine the estimated rotation speed value of the rotating machine.

The angular velocity data from the gyroscope, three-axis linear acceleration data from the accelerometer, and the magnetic field data from the magnetometer can be context dependent features. As used herein, a context dependent feature refers to a feature that may or may not be relied upon when generating an output from the machine-learning model. The angular velocity data from the gyroscope, three-axis linear acceleration data from the accelerometer, and the magnetic field data from the magnetometer can be context dependent features. As used herein, a context dependent feature refers to a feature that may or may not be relied upon when generating an output from the machine-learning model. Context dependent features may be selected based on one or more parameters observed in the system, and may be included or omitted from analysis by the model in selective contexts. Such features may be selected based on situational analysis and so, in examples that follow, a comparison of one feature (a rate, variation in rate, etc.) to one or more thresholds. Situational feature selection may refer to such an analysis, in which the situation of the system is analyzed by, for example, comparing a parameter to a threshold, and features to rely upon in the model are selected for or omitted from analysis.

For instance, the magnetometer data may be most accurate when a rate of magnetic flux change of the target building equipment (e.g., the magnetic flux of a rotating component of a rotating machine) represented by the magnetic field data is less than a value which is equal to a fraction of the output data rate of the magnetometer. For instance, the rotational speed detection data from the magnetometer may be accurate when a rate of magnetic flux change of the target building equipment is less than a threshold rate that is equal to a fraction of an ODR of the magnetometer such as ODR/n, where n is equal to 2, 3, 4, 5, or 6, among other possible values. Accordingly, in some embodiments the systems and methods herein provide for feature selection of a model (e.g., a CNN) based for example on a comparison of the rate of magnetic flux change of the target building equipment to a threshold rate, as detailed herein. That is, the magnetometer data can be a selected feature when a rate of magnetic flux change of the target building equipment is less than a threshold rate, and can be omitted (not selected) as a feature when a rate of magnetic flux change of the target building equipment is equal to or greater than to a threshold rate (e.g., ODR/n), as detailed herein. Hence, the controller 312 can be configured to obtain the estimated rotation speed value of the rotating machine based on the magnetic field data and the audio data when a rate of magnetic flux change of the target building equipment is less than a threshold rate.

Conversely, the accelerometer data and the gyroscope data can be a selected feature when a rate of magnetic flux change of the target building equipment is equal to or greater than to a threshold rate (e.g., ODR/n), and can be omitted as a features when a rate of magnetic flux change of the target building equipment is less than a threshold rate. Hence, the controller 312 can be configured to obtain the obtain, from the trained machine-learning model, the estimated rotation speed value of the rotating machine based on the angular velocity data, the three-axis linear acceleration data, and the audio data when a rate of magnetic flux change of the target building equipment is greater than or equal to the threshold rate. The above mentioned selective inclusion of i) the magnetometer data and audio data or ii) the accelerometer data and the gyroscope data along with the audio data can ensure accurate determination of rotational speeds of the rotating machine regardless of the actual rotational speed of the rotating machine.

In some embodiments, the sampling rate of the magnetometer can be in a range from about 1 hertz (Hz)/second (s) to about 1000 Hz/s. For instance, the sampling rate can be greater than 500 Hz/s, greater than about 600 Hz/s, greater than about 700 Hz/s, greater than about 800 Hz/s, or greater than about 900 Hz/s. In some embodiments the sampling frequency can be about 800 Hz/s, about 900 Hz/s, or about 1000 Hz/s, among other possible values. In some embodiments, the sampling rate threshold can be equal to n * X, wherein n is 1, 1.5, 2, 2.5, or 3, and X is equal to a sampling frequency of the magnetometer. For instance, the sampling rate threshold can be equal to n * 2, among other possibilities.

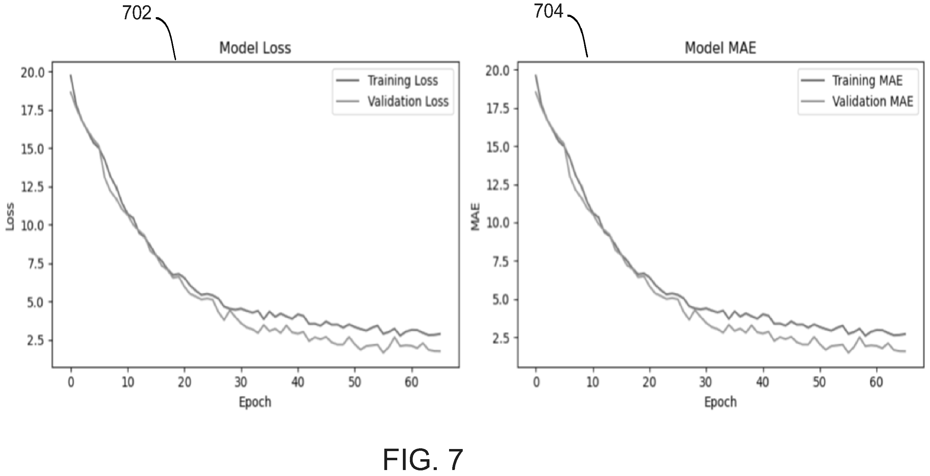

The preprocessed data can be provided to a machine-learning model 320. In some embodiments the machine-learning model can be a convolutional neural network model. In some embodiments, the preprocessed data can be used to train the machine-learning model 320, as described herein. In some embodiments, the preprocessed data can be used to query the machine-learning model 320 that is trained (e.g., based on the preprocessed data). That is, the CNN serves as an intelligent processing system that classifies and analyzes IMU sensor data to determine rotational speed (as indicated by "RPM" at 322), as described herein. Aspects of the machine-learning model 320 are detailed herein, for instance, with respect to FIG. 7.

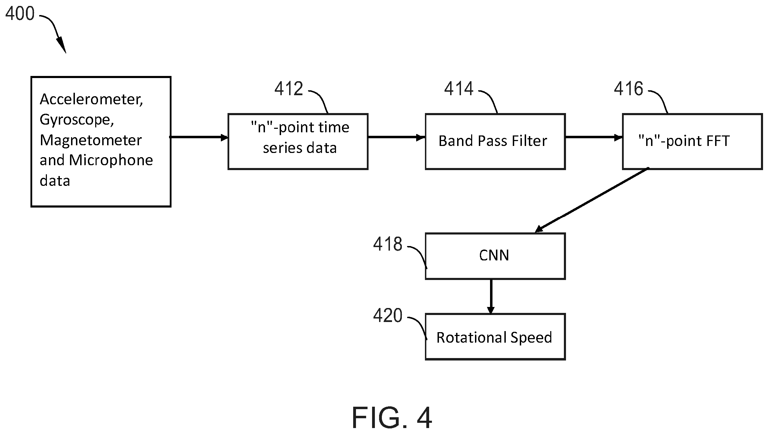

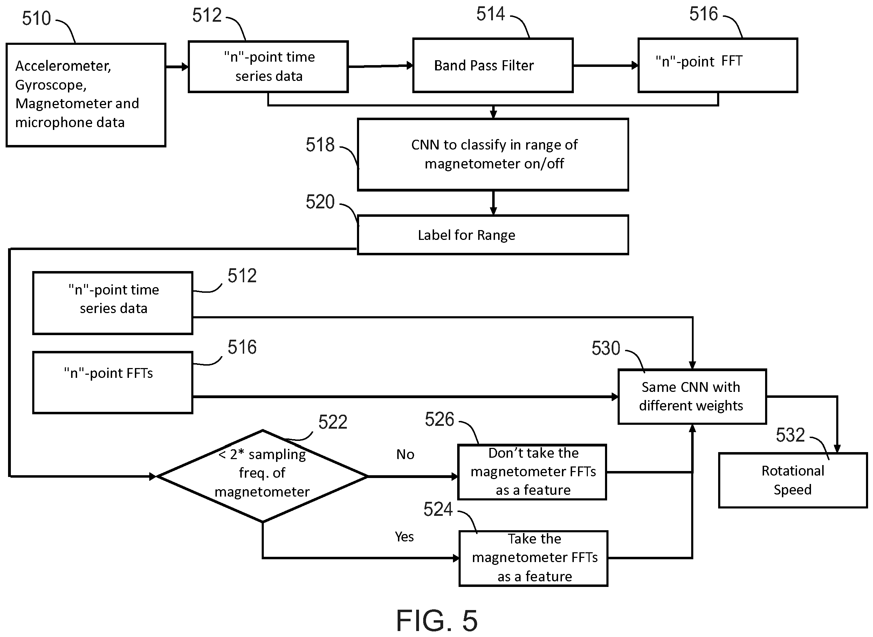

FIGS. 4-5 relate to methods of training the models herein. Specifically, FIG. 4 relates to a method that is suitable at least for instances with less available sensor data, while FIG. 5 relates to a method that is suitable at least for instance with more available (e.g., more comprehensive) sensor data. Some or all aspects of the methods of FIGS. 4-5 can be performed by one or more computing devices (e.g., computing device 200) and/or the systems (e.g., system 304), as described herein. For instance, in some embodiments the controller 312 of the system 304 can perform each aspect of the methods of FIGS. 4-5 and/or can work in conjunction with a trained machine-learning model to perform some or all aspects of FIGS. 4-5.

FIG. 4 is another example flow diagram 400 showing an illustrative process for non-intrusive IMU and AI-based rotational speed monitoring of industrial equipment. That is, the systems and methods herein can implement a specialized processing pipeline as reflected in FIG. 4 for scenarios where limited sensor data is available. In data science or machine-learning, larger datasets can often comprising thousands or millions of data points are often preferred for training robust models. Thus, while limited sensor data points may be insufficient for some other applications, the systems and methods herein are amenable to use of a relatively small training data sets (i.e., training data) and inference (input) data sets. In this method, the system first collects multi-dimensional data from an IMU sensor package, as indicated at element 410. As mentioned, the data can include data from a three-axis gyroscope, three-axis accelerometer, magnetometer, and audio sensors (e.g., which are configured to collect two-second audio samples, etc.). The system preprocesses this raw sensor data into standardized n-point time series data format, as indicated at 412. The preprocessing, as described herein, can ensure consistent data handling across different sensor types, among other benefits.

The preprocessed time series data then undergoes band pass filtering, as indicated at 414. The band pass filtering can isolate specific frequency ranges relevant to rotational motion, while eliminating noise and irrelevant signal components (e.g., irrelevant frequencies for purposes of determination of rotational speed). This filtering process can remove frequency components that would otherwise introduce error into the rotation speed (e.g., RPM) determination. In some embodiments, the band pass filter parameters can be adaptively configured based on the expected operational range of the machinery being monitored.

Following band pass filtering, the system performs a n-point Fast Fourier Transform (FFT) analysis to convert each of the filtered time-domain signals from each of the different types of sensors into the frequency domain, as indicated at 416. This FFT operation identifies dominant frequency components corresponding to rotational characteristics of the machinery. The n-point FFT provides sufficient frequency resolution to detect subtle variations in rotational patterns while maintaining computational efficiency for edge-based processing. The models herein can be trained with real-world data obtained from an IMU sensor, a derivative of real-world data obtained from an IMU sensor, or both. For instance, the filtered time series data (real-world data), the FFT data (which is derived from the real-world time series data), or both can be provided to train a machine-learning model such as those described herein. In some embodiments, at least the FFT data is provided to train the machine-learning model (i.e., the machine-learning model is trained on the FFT data). In some embodiments, only the FFT data (not the filtered time series data) is provided to train the machine-learning model, as described with respect to FIG. 4. However, in some embodiments, both the filtered time series data and the FFT analysis results are then fed into a machine-learning model such as a convolutional neural network (CNN) (418) specifically trained to recognize rotational patterns across multiple sensor modalities, as described with respect to FIG. 5.

Once trained, the trained machine-learning model such as a trained CNN can process these inputs (e.g., at least FFT data) through multiple convolutional layers, max pooling operations, and normalization stages to extract relevant features and determine the rotation speed (e.g., RPM) values, as indicated at 420, with high accuracy even with limited data points.

FIG. 5 is another example flow diagram 500 showing an illustrative process for non-intrusive IMU and AI-based rotational speed monitoring of industrial equipment. For scenarios with more comprehensive sensor data availability, the system implements an advanced processing method of FIG. 5 that incorporates selective feature consideration based on specific operational parameters. Similar to the process 400 of FIG. 4, the process 500 begins with data collection from the gyroscope, accelerometer, magnetometer, and audio sensors, as indicated at 510. Subsequently, the real-world sensor data can be preprocessed into "n"-point time series format, where "n" is any suitable value such as 1024 points, etc., can undergo band pass filtering and FFT analysis, as indicated at 512, 514, and 516, respectively.

However, in FIG. 5, an initial machine-learning model (e.g., a CNN classification layer) can specifically evaluate the magnetometer data to determine whether the frequency characteristics of the magnetometer data fall within a usable (statistically significant) range and label the data accordingly, as indicated at 518 and 520, respectively.

Feature selection of the labeled data can occur, as indicated at 522. As mentioned, the sampling rate threshold is equal to n * X, wherein n is 1, 1.5, 2, 2.5, or 3, and X is equal to a sampling frequency of the magnetometer. The sampling rate determines how frequently the raw sensor measurements are taken by the magnetometer, while the ODR, as described herein determines how frequently processed values are made available from the magnetometer to the application processor (e.g., to the controller).

As indicated at 526, when the rate of the magnetic flux change represented by the magnetic field data is less than the sampling rate threshold the magnetometer data can be selected as a feature. Conversely, when the rate of the magnetic flux change represented by the magnetic field data is less than the sampling rate threshold the magnetometer data can be omitted as a feature, as indicated at 526. While FIG. 5, describes feature selection of the magnetometer data based on comparations of the rate of the magnetic flux change represented by the magnetic field data to a sampling rate threshold, the disclosure is not so limited. Rather, in some embodiments, feature selection of the magnetometer data can be based on comparations of the rate of the magnetic flux change represented by the magnetic field data to a fraction of the ODR (e.g., ODR/"n" such as ODR/2 or ODR/4), as detailed herein.

Subsequent, 522, the process can proceed to 530. At 530, a trained machine-learning model can be queried with the preprocessed different types of sensor data to obtain an estimated rotation speed value of the rotating machine (e.g., as represented by element 532). For instance, the trained machine-learning model can be queried with a subset of the data types obtained from the IMU sensor. For example, responsive to a determination that the rate of the magnetic flux change represented by the magnetic field data is less than the sampling rate threshold the trained machine-learning model can be queried with the audio data and the magnetometer data, as represented by element 524. In such instances, the trained model may not be queried with the accelerometer data and/or gyroscope data, for instance, to reduce an amount of computations, reduce data transmission associated with determination of a rotational speed of the rotating machine, and/or to improve accuracy of the rotational speed determination

Alternatively, responsive to a determination that the rate of the magnetic flux change represented by the magnetic field data is greater than or equal to the sampling rate threshold the trained machine-learning model can be queried with audio data, accelerometer data, and gyroscope data. In such instances, the trained model may not be queried with the magnetometer data, for instance, to reduce an amount of computations, reduce data transmission associated with determination of a rotational speed of the rotating machine, and/or to improve accuracy of the rotational speed determination. For example, when the detected frequency equals or exceeds twice the magnetometer's sampling frequency, the magnetometer FFT data is excluded from feature consideration to prevent aliasing errors.

This selective feature consideration can be implemented through a sophisticated neural network architecture 530 where different sensor inputs are weighted dynamically based on their reliability at different frequency ranges. As such, the same CNN architecture can be employed, but with different weight distributions depending on the sensor data selected for processing. This approach maintains processing consistency while optimizing accuracy across diverse operational conditions.

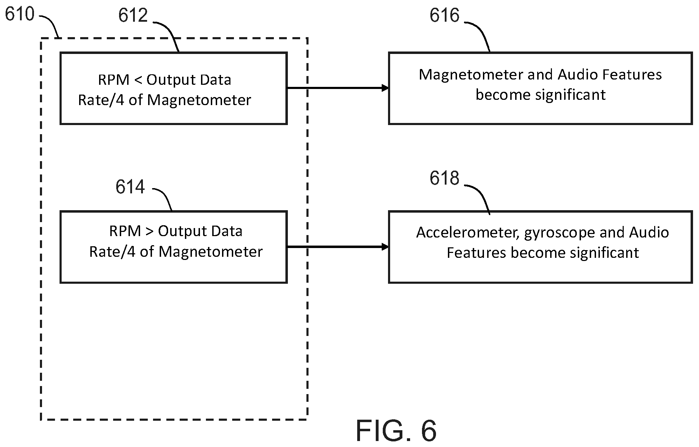

FIG. 6 is an example flow diagram 600 showing an illustrative process for feature selection for non-intrusive IMU and AI-based rotational speed monitoring of industrial equipment. That is, the systems and methods herein permit intelligent sensor data selection based on current and/or actual real-life operating conditions. As mentioned, in some embodiments, feature selection can be performed with respect to at least the magnetometer data. For instance, at 610 the magnetometer data can be selected as a feature or omitted as a feature based whether a rate of magnetic flux change of the target building equipment is less than or is greater than or equal to a fraction of the magnetometer output data rate. The determination can be made by one or more computing devices (e.g., computing device 200) and/or the systems (e.g., system 304), as described herein. For instance, in some embodiments the controller 312 of the system 304 can determine whether the rotational speed (e.g., RPM) is less than a fraction of an output data rate of the magnetometer. The output data rate of the magnetometer may be a predefined value that is provided (programmed) into the controller 312, in some embodiments.

As mentioned, magnetometer data may be most accurate (i.e., significant) when a rate of magnetic flux change of the target building equipment (e.g., the magnetic flux of a rotating component of a motor, etc.) represented by the magnetic field data is less than a value which is equal to a fraction of the output data rate of the magnetometer. For instance, the rotational speed detection data from the magnetometer may be accurate when a rate of magnetic flux change of the target building equipment is less than a threshold rate that is equal to a fraction of the ODR of the magnetometer (e.g., ODR/n). Accordingly, in some embodiments the systems and methods herein provide for feature selection of a model (e.g., a CNN) based for example on a comparison of the rate of magnetic flux change of the target building equipment to a threshold rate, as detailed herein. That is, the magnetometer data can be a selected feature when a rate of magnetic flux change of the target building equipment is less than a threshold rate, as indicated at 612. This selection occurs because magnetometer provides more accurate (i.e., statistically significant) data in lower rotation speed ranges. Hence, the controller 312 can be configured to obtain the estimated rotation speed value of the rotating machine based on the magnetic field data and the audio data when a rate of magnetic flux change of the target building equipment is less than a threshold rate, as indicated at 616.

However, the magnetometer data can be omitted (not selected) as a feature when a rate of magnetic flux change of the target building equipment is equal to or greater than to a threshold rate (e.g., ODR/n), as indicated at 614. In such instances, the accelerometer data and the gyroscope data can be selected features when a rate of magnetic flux change of the target building equipment is equal to or greater than to a threshold rate (e.g., ODR/n). Hence, the controller 312 can be configured to obtain the obtain, from the trained machine-learning model, the estimated rotation speed value of the rotating machine based on the angular velocity data, the three-axis linear acceleration data, and the audio data when a rate of magnetic flux change of the target building equipment is greater than or equal to the threshold rate, as indicated at 618.

The above mentioned selective inclusion of i) the magnetometer data and audio data, as indicated at 612 and 616, or ii) the selective inclusion of accelerometer data and the gyroscope data along with the audio data, as indicated at 614 and 616, can ensure accurate determination of rotational speeds of the rotating machine regardless of the actual rotational speed of the rotating machine. Stated differently, this is a situational feature selection methodology that permits the system to adapt to different RPM ranges by intelligently selecting the most appropriate sensor data, maintaining optimal accuracy throughout the operating range of the monitored equipment. Notably, the audio data features remained as a constant contributor across all RPM ranges, providing consistent measurement data regardless of magnetometer saturation conditions.

FIG. 7 illustrates training performance graphs 702, 704 of an example of aspects of a neural network architecture suitable for non-intrusive IMU and AI-based rotational speed monitoring of industrial equipment. Hence, FIG. 7 documents the performance characteristics of the neural network used in non-intrusive IMU and AI-based rotational speed monitoring of industrial equipment.

As illustrated in FIG. 7, the training performance graph 702 shows "Model Loss" with training and validation loss curves decreasing over approximately 60 epochs, indicating good convergence without significant overfitting. Additionally, the training performance graph 704 shows "Model MAE" (Mean Absolute Error) with similar convergence patterns, as illustrated in FIG. 7. In some embodiments, the neural network architecture can include a plurality of layers that are suitable for non-intrusive IMU and AI-based rotational speed monitoring of industrial equipment. As an example, the architecture can employ a progressive feature extraction approach through multiple convolutional layers with increasing filter complexity (e.g., 32 → 96 → 48), followed by dimension reduction through pooling operations, and concluding with fully connected layers for final regression output. This design effectively balances model capacity with computational efficiency for edge-based rotational speed (e.g., RPM) monitoring.

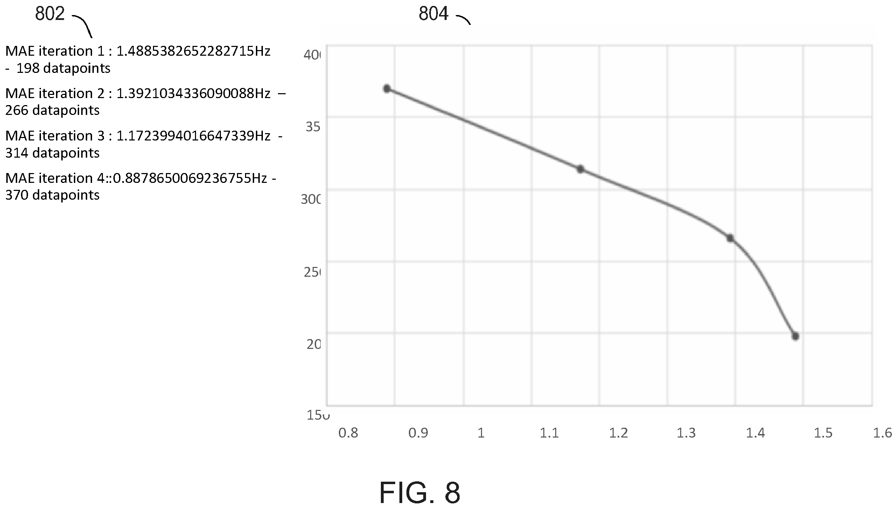

FIG. 8 illustrates example relationships between a quantity of data points and mean absolute error rates for non-intrusive IMU and AI-based rotational speed monitoring of industrial equipment.

The "MAE with datapoints" section represented as 802 provides four iterations of testing with increasing amounts of data and their corresponding Mean Absolute Error (MAE) values:
Iteration 1: Using 198 datapoints, the systems herein (e.g., system 302 as illustrated in FIG. 3) achieved an MAE of 1.4885382652282715Hz;
Iteration 2: Using 266 datapoints, the MAE improved to 1.3921034336090088 Hz;
Iteration 3: Using 314 datapoints, the MAE further improved to 1.1723994016647339 Hz; and
Iteration 4: Using 370 datapoints, the MAE significantly improved to 0.8878650069236755 Hz.

The accompanying graph 904 visually demonstrates the inverse relationship between the number of datapoints used (x-axis) and the resulting Mean Absolute Error (y-axis). The graph 904 shows a clear downward trend, with the error decreasing as more datapoints are used for training. The graph displays four data points that correspond to the four iterations, showing how the MAE decreases from approximately 370 (error units) with the fewest datapoints to approximately 200 with 370 datapoints. The curve is relatively linear and shows an accelerated improvement (steeper decline) as the number of datapoints increases e.g., beyond 314 data points.

The results demonstrate that with only a small quantity of data points such as 370 datapoints, the system achieves a very good mean absolute error of 0.887865Hz, which is significantly improved as compared to competing algorithms such as those that do not employ feature selection for magnetometer data. Hence, even with a relatively modest sized dataset, the systems and methods herein can outperform alternative approaches.

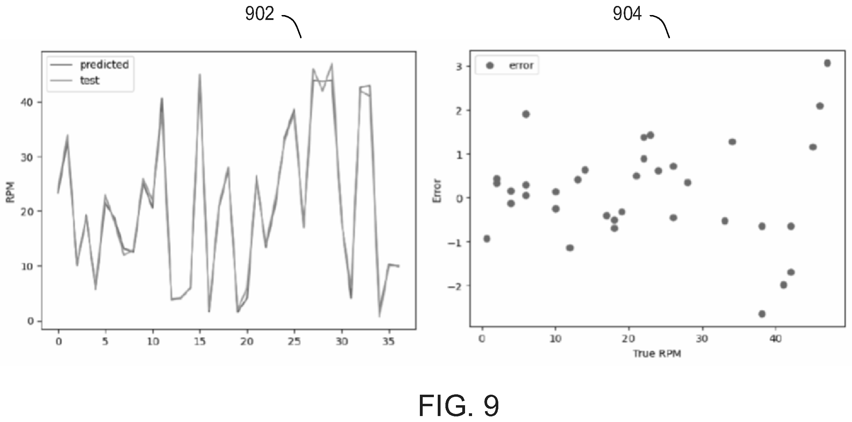

FIG. 9 illustrates performance graphs 902, 904 demonstrating aspects of non-intrusive IMU and AI-based rotational speed monitoring of industrial equipment. The first graph 902 plots predicted RPM values (blue line) against test data (orange line) across approximately 35 samples. This comparison graph 902 shows excellent correlation between predicted and actual RPM values across various rotational speeds ranging from near-zero to approximately 45 RPM. The predicted line closely follows the test data line throughout the range, with particularly strong alignment at higher RPM values around 40-45 RPM. The visualization demonstrates that the system can accurately track both gradual and sudden changes in rotational speed.

The second graph 904 illustrated as a scatter plot displays the error distribution (y-axis, ranging from approximately -2 to +3) plotted against true RPM values (x-axis, ranging from 0 to 40). This graph 904 reveals the system's precision characteristics, showing that most errors fall within ±1 RPM across the majority of the operating range, with some slightly larger errors appearing at the higher RPM values. The distribution pattern suggests the system maintains consistent accuracy throughout most of the operating range, with marginally decreased precision at the extremes.

Thus, the graphs 902, 904 provide an example of empirical validation of the system's performance on real-world test data, for instance, confirming the system's accuracy and reliability for real-world non-intrusive rotation speed RPM monitoring of rotating equipment.

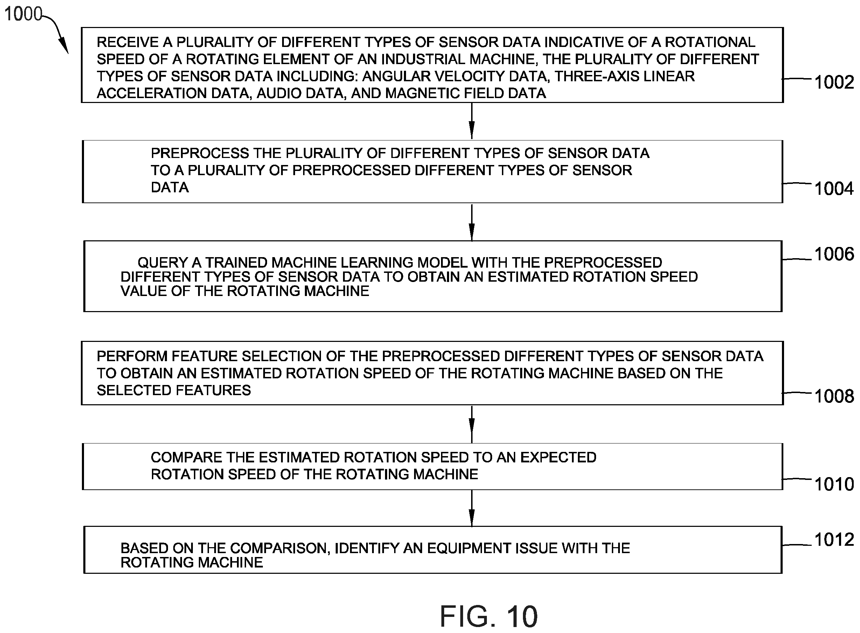

FIG. 10 illustrates an example method 1000 of non-intrusive IMU and AI-based rotational speed monitoring of industrial equipment.

At 1002, the method 1000 includes receiving, by a computing device (e.g., at the controller 312 of the system 302 as described with respect to FIG. 3) receive a plurality of different types of sensor data. The plurality of sensor data types include sensor data indicative of a rotation speed of a rotating machine at the site, the plurality of different types of sensor data include: angular velocity data, three-axis linear acceleration data, audio data, and magnetic field data. The sensor data can be received continuously, periodically (e.g., each minute, each hour, etc.), and/or can be received responsive to an input. The data can correspond to real-time or stored real world data that is indicative of actual performance and/or actual operating conditions associated with building equipment (e.g., rotating building equipment) at a site. Examples of the sensors providing the sensor data include a magnetometer, an accelerometer, a gyroscope, and a microphone such as those located in the IMU sensors herein.

At 1004, the method 1000 includes preprocessing the plurality of different types of sensor data to a plurality of preprocessed different types of sensor data, as described herein. For instance, preprocessing can include preprocessing the received sensor data (received at 1002) into Fast Fourier transform (FFT) data, as described herein.

In some embodiments, the method 1000 includes training a machine-learning model with the received sensor data and/or with the FFT data, as described herein. In some embodiments, the machine-learning model can be trained (e.g., in a cloud environment) and the trained model can be communicated (e.g., downloaded) to a memory in one or more devices such as one or more edge devices (e.g., a memory in one or more IMU sensors).

At 1006, the method 1000 includes query a trained machine-learning model with the preprocessed different types of sensor data, as described herein. At 1008, the method 1000 includes performing feature selection of the preprocessed different types of sensor data to obtain an estimated rotation speed of the rotating machine based on the selected features, as described herein.

At 1010, the method 1000 includes comparing the estimated rotation speed to an expected rotation speed of the rotating machine. For instance, the comparison can identify a magnitude, a duration, and/or a frequency of one or more occurrences of any deviation from the expected rotation speed (e.g., a set point) of the rotation machine.

At 1012, the method includes based on the comparison, identify an equipment issue with the rotating machine. For example, the systems and methods herein can determine whether the magnitude, the duration, and/or the frequency of the one or more occurrences of the deviation exceed a corresponding threshold, among other possibilities. If the threshold is exceeded, a building equipment issue can be identified. That is, the corresponding equipment experiencing the deviation in rotational speed from the expected rotational speed can be identified as experiencing a building equipment issue.

In some embodiments, the method 1000 includes remediating the building equipment issue (e.g., as identified at 1012). Examples of building equipment remediations include performing maintenance on the building equipment such as lubricating a moving (e.g., rotating) component in the building equipment, altering a set point, updating firmware or software associate with building equipment, replacing the building equipment, etc. Hence, the systems and methods herein can timely identify and remediate building equipment issues associated with rotating equipment, thereby optimization operation of the equipment.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A system for non-intrusive inertial measurement unit (IMU) and artificial intelligence (Al)-based rotation monitoring of machines located at a site, the system comprising:
an IMU sensor configured to collect a plurality of different types of sensor data indicative of a rotational speed of a rotating element of a rotating machine, wherein the plurality of different types of sensor data include: angular velocity data, three-axis linear acceleration data, audio data, and magnetic field data; and
a controller coupled to the IMU sensor, the controller including a processor and a memory storing non-transitory instructions executable by the processor to:
preprocess the plurality of different types of sensor data to a plurality of preprocessed different types of sensor data; and
query a trained machine-learning model with the preprocessed different types of sensor data to obtain an estimated rotation speed value of the rotating machine.

2. The system of claim 1, wherein the trained machine-learning model further is a trained convolutional neural network model that is trained with real-world data obtained from the IMU sensor, a derivative of real-world data obtained from the IMU sensor, or both.

3. The system of claim 2, wherein:
the real-world data is configured as time series data; and
the time series data is filtered with a band pass filter to obtain Fast-Fourier Transform (FFT) data;
optionally, wherein the trained convolutional neural network is trained with at least the FFT data.

4. The system of any preceding claim, wherein the IMU sensor and the controller are included in an individual edge device with embedded software connected securely to a cloud infrastructure via a wireless connection.

5. The system of any preceding claim, wherein the IMU sensor includes:
a magnetometer configured to collect the magnetic field data;
an accelerometer configured to collect the three-axis linear acceleration data;
a microphone configured to collect the audio data; and
a gyroscope configured to collect the angular velocity data.

6. The system of any preceding claim, wherein:
the controller is further configured to perform situational feature selection for the trained machine-learning model; and
the audio data is a core feature.

7. The system of claim 6, wherein each of the angular velocity data, three-axis linear acceleration data, and magnetic field data are subject to situational feature selection.

8. The system of claim 7, wherein situational feature selection is performed based on comparison of a rate of a magnetic flux change represented by the magnetic field data to a sampling rate threshold of a magnetometer in the IMU sensor.

9. The system of claim 8, wherein the controller is further configured to select the magnetic field data as a situational feature when the rate of the magnetic flux change represented by the magnetic field data is less than the sampling rate threshold, wherein the sampling rate threshold is equal to n * X, wherein: n is 1, 1.5, 2, 2.5, or 3, and X is equal to a sampling frequency of the magnetometer.

10. The system of claim 9, wherein the controller is further configured to obtain, from the trained machine-learning model, the estimated rotation speed value of the rotating machine based on the magnetic field data and the audio data.

11. The system of claim 8, wherein the controller is further configured to omit the magnetic field data as a situational feature when a rate of a magnetic flux change represented by the magnetic field data is greater than or equal to a sampling rate threshold associated with a magnetometer included in the IMU sensor, wherein the sampling rate threshold is equal to n * X, wherein n is 1, 1.5, 2, 2.5, or 3, and X is equal to a sampling frequency of the magnetometer.

12. The system of claim 11, wherein the controller is further configured to:
select each of the angular velocity data and three-axis linear acceleration data as situational features; and
obtain, from the trained machine-learning model, the estimated rotation speed value of the rotating machine based on the angular velocity data, the three-axis linear acceleration data, and the audio data.

13. The system of any preceding claim, wherein the rotating equipment is a motor, turbine, or compressor.

14. A non-transitory, computer-readable medium including instructions that when executed by a processor cause the processor to:
receive, from an inertial measurement unit (IMU sensor), a plurality of different types of sensor data indicative of a rotation speed of a rotating machine at a site, the plurality of different types of sensor data include: angular velocity data, three-axis linear acceleration data, audio data, and magnetic field data;
preprocess the plurality of different types of sensor data to a plurality of preprocessed different types of sensor data, wherein preprocessing the data includes transforming the data into Fast Fourier transform (FFT) data;
query a trained machine-learning model with the preprocessed different types of sensor data;
perform feature selection of the preprocessed different types of sensor data to obtain an estimated rotation speed of the rotating machine based on the selected features;
compare the estimated rotation speed to an expected rotation speed of the rotating machine; and
based on the comparison, identify an equipment issue with the rotating machine.

15. A method for non-intrusive IMU and AI-based rotational speed monitoring of industrial equipment, the method comprising:
receiving, from a plurality of sensors included in an inertial measurement unit (IMU) sensor, a plurality of different types of sensor data indicative of a rotation speed of a rotating machine at a site, the plurality of different types of sensor data include: angular velocity data, three-axis linear acceleration data, audio data, and magnetic field data;
preprocessing the plurality of different types of sensor data to a plurality of preprocessed different types of sensor data including preprocessed audio data, preprocessed angular velocity data, preprocessed linear acceleration data, and preprocessed magnetic field data, wherein preprocessing the data includes transforming the data into Fast Fourier transform (FFT) data; and
querying a trained machine-learning model with a combination of:
i) the preprocessed audio data; and
ii) at least one of the preprocessed angular velocity data, the preprocessed three-axis linear acceleration data, and the preprocessed magnetic field data obtain an estimated rotation speed value of the rotating machine;
comparing the estimated rotation speed to an expected rotation speed; and
based on the comparison, identifying the presence of an equipment issue with the rotating machine.
